# EUROPÄISCHE PATENTSCHRIFT

(11) **EP 1 818 579 B1**
(45) Veröffentlichungstag und Bekanntmachung des Hinweises auf die Patenterteilung: **23.11.2011**
(21) Anmeldenummer: 06002708.3
(22) Anmeldetag: 10.02.2006
(51) Int. Cl.: F16J 15/32, F16J 15/56

(54) **Abstreiferanordnung**
Scraping arrangement
Dispositif racleur

(43) Veröffentlichungstag der Anmeldung: 15.08.2007
(73) Patentinhaber: Carl Freudenberg KG, 69469 Weinheim (DE)
(72) Erfinder: Von Borstel, Dieter, 21720 Guderhandviertel (DE)

(56) Entgegenhaltungen:
- DE-A- 3 244 209
- US-A- 5 897 119

## Beschreibung

Die Erfindung betrifft eine Abstreiferanordnung, umfassend einen Abstreifer Abstreiferanordnung, umfassend einen Abstreifer mit einer Abstreiflippe zum Abstreifen von abzustreifendem Medium von der abzustreifenden Oberfläche eines ersten Maschinenelements, wobei die Abstreiflippe die abzustreifende Oberfläche unter elastischer radialer Vorspannung anliegend berührt und wobei der Abstreifer in einem radial in Richtung des ersten Maschinenelements offenen Einbauraum des zweiten Maschinenelements schwimmend angeordnet ist.

Eine solche Abstreiferanordnung ist der aus US-A-5 897 119 bekannt. Der Abstreifer ist in seinem Einbauraum in axialer und radialer Richtung schwimmend angeordnet. Die Führung des Abstreifers innerhalb seines Einbauraums ist wenig zufriedenstellend.

Aus der DE 32 44 209 A1 ist eine Dichtung bekannt, zum Abdichten gegen hydraulische Medien, mit einem Dichtkörper und zwei axial mit Abstand hintereinanderliegenden Abstreiflippen, von denen in Einbaulage der Dichtung die eine Abstreiflippe mediumsseitig und die andere Abstreiflippe luftseitig angeordnet ist.

Eine weitere Abstreiferanordnung ist auch aus der DE 31 00 627 A1 bekannt. Abstreifer gelangen radial zwischen zwei relativ zueinander axial hin- und her beweglichen Maschinenelementen zur Anwendung. Das erste Maschinenelement kann beispielsweise durch eine Stange gebildet sein, das zweite Maschinenelement durch ein Gehäuse, wobei der Abstreifer relativ ortsfest im Gehäuse angeordnet ist und die abzustreifende Oberfläche der Stange anliegend umschließt.

Abstreifer bilden häufig einen Bestandteil einer Dichtungsanordnung und gelangen dann in Kombination mit einem Dichtring zur Anwendung. Der Dichtring ist dabei auf der dem abzudichtenden Raum axial zugewandten Seite des Abstreifers angeordnet und hält abzudichtendes Medium innerhalb des abzudichtenden Raums bei in die Umgebung ausfahrender Stange zurück. Fährt die Stange anschließend aus der Umgebung wieder in Richtung des abzudichtenden Raums ein, verhindert der Abstreifer durch seine Abstreifwirkung, dass Verunreinigungen auf der abzustreifenden Oberfläche zusammen mit der Stange in die Dichtungsanordnung / in den abzudichtenden Raum gelangen und dort beispielsweise die Dichtlippe beschädigen oder zerstören.

Außerdem muss der Abstreifer derart gestaltet sein, dass eine Leckage von abzudichtendem Medium, das den Dichtring bei ausfahrender Stange in Richtung des Abstreifers passiert hat, minimiert wird. Das vom Abstreifer nicht in der Dichtungsanordnung zurückgehaltene abzudichtende Medium muss vom Abstreifer bei Rückbewegung der Stange wieder in Richtung des abzudichtenden Raums gelassen werden. Dadurch wird der Abstreifer geschmiert.

Die zuvor genannten Funktionen erfüllt der Abstreifer nur dann, wenn der durch die Anpressung der Abstreiflippe auf die abzustreifende Oberfläche verursachte Pressungsverlauf sehr genau erreicht wird. Voraussetzung für einen genauen Pressungsverlauf sind jedoch teure, in fertigungstechnischer Hinsicht nur schwer zu erreichende, sehr geringe Einbautoleranzen und eine sehr genaue konzentrische Zuordnung der beiden gegeneinander abzudichtenden Maschinenelemente.

Der Erfindung liegt die Aufgabe zu Grunde, eine Abstreiferanordnung der eingangs genannten Art derart weiter zu entwickeln, dass die zuvor beschriebenen Funktionen bezüglich Abstreifen von Verunreinigungen und Passieren lassen von abzustreifendem Medium aus der Umgebung in Richtung des abzudichtenden Raums an der Abstreiflippe vorbei auch dann sehr gut erfüllt werden und dass der Pressungsverlauf auch dann sehr gut ist, wenn Fertigungs- und/oder Einbautoleranzen größer sind und/oder die Konzentrizität der gegeneinander abzudichtenden Maschinenelemente geringer ist. Insgesamt soll die Abstreiferanordnung auch bei diesen Bedingungen gleich bleibend gute Gebrauchseigenschaften während einer langen Gebrauchsdauer aufweisen.

Diese Aufgabe wird erfindungsgemäß durch die Merkmal von Anspruch 1 gelöst. Auf vorteilhafte Ausgestaltungen nehmen die Unteransprüche Bezug.

Zur Lösung der Aufgabe ist eine Abstreiferanordnung vorgesehen, wobei der Abstreifer eine sich radial in Richtung des zweiten Maschinenelements erstreckende Führungsnase aufweist, die in axial und radialer Richtung jeweils mit Abstand von einer Führungsnut des zweiten Maschinenelements umschlossen und dadurch während der bestimmungsgemäßen Verwendung der Abstreiferanordnung in der Führungsnut in axialer und radialer Richtung schwimmend gelagert ist. Der Abstreifer weist nach einer ersten Ausgestaltung eine sich radial in Richtung des zweiten Maschinenelements erstreckende Führungsnase auf, die in axialer und radialer Richtung jeweils mit Abstand von einer Führungsnut des zweiten Maschinenelements umschlossen und dadurch während der bestimmungsgemäßen Verwendung der Abstreiferanordnung in der Führungsnut in axialer und radialer Richtung schwimmend gelagert ist.

Um verbesserte Gebrauchseigenschaften zu erzielen, kann es vorgesehen sein, dass axial beiderseits benachbart zur Führungsnase jeweils eine weitere Dichtlippe angeordnet ist und dass die weiteren Dichtlippen die Gehäusewand axial außerhalb der Führungsnut unter elastischer radialer Vorspannung dichtend berühren. Durch die spezielle Ausgestaltung wird erreicht, dass der Pressungsverlauf der Abstreiflippe weitgehend konstant ist und auch bei Verlagerungen der gegeneinander abzudichtenden Maschinenelemente erhalten bleibt; die Abstreiflippe berührt dadurch während der bestimmungsgemäßen Verwendung der Abstreiferanordnung stets die abzustreifende Oberfläche anliegend. Diese Verlagerungen können beispielsweise durch einen Winkel- und/oder Radialversatz entstehen und/oder durch herstellungsbedingte und/oder montagebedingte Toleranzen der miteinander montierten Teile der Abstreiferanordnung.

Durch die weiteren Dichtlippen ist von Vorteil, dass sich der Abstreifer der Abstreiferanordnung während der bestimmungsgemäßen Verwendung im eingebauten Zustand im Momentengleichgewicht befindet, das eine stabile Lage auch bei radialen oder kardanischen Bewegungen der beiden Maschinenelemente relativ zueinander gewährleistet.

Diese Vorteile weist die Dichtungsanordnung auch dann auf, wenn eine sich in radialer Richtung erstreckende Führungsnase vorgesehen ist, die in radialer und axialer Richtung beweglich innerhalb der Führungsnut angeordnet ist. Auch in diesem Fall sorgen die weiteren Dichtlippe für ein Momentengleichgewicht und dafür, dass sich die Führungsnase verkantungsfrei innerhalb der Führungsnut sowohl in axial als auch in radialer Richtung bewegen kann. Nach einer anderen Ausgestaltung kann es vorgesehen sein, dass axial zwischen den weiteren Dichtlippen ein Anschlagnocken angeordnet ist, der einstückig ineinander übergehend und materialeinheitlich mit zumindest einer der weiteren Dichtlippen ausgebildet ist.

In seiner Funktion entspricht der Anschlagnocken im Wesentlichen der Führungsnase der zuvor beschriebenen ersten Ausgestaltung , wobei auch der Führungsnocken Extremauslenkungen der beiden Maschinenelemente relativ zueinander begrenzt.

Im Hinblick auf eine einfache und kostengünstige Herstellbarkeit des Abstreifers kann es vorgesehen sein, dass der Anschlagnocken einstückig ineinander übergehend und materialeinheitlich mit zumindest einer, bevorzugt beiden weiteren Dichtlippen ausgebildet ist.

Um eine verbesserte Abdichtung des Abstreifers am zweiten Maschinenelement sicher zu stellen, können eine der weiteren Dichtlippen und der Anschlagnocken gemeinsam in einer Führungsnut des zweiten Maschinenelements angeordnet und den jeweils axial benachbart angrenzenden Begrenzungswandungen der Führungsnut jeweils axial beweglich zugeordnet sein. Die andere weitere Dichtlippe kann die Gehäusewand axial außerhalb der Führungsnut unter elastischer radialer Vorspannung dichtend berühren und bildet dadurch eine Vorschaltdichtung für die Führungsnut, und die weiteren Dichtlippen bewirken gemeinsam das zuvor beschriebenen Momentengleichgewicht.

Ein weiter verbessertes Momentengleichgewicht wird erreicht, wenn der Abstreifer als Doppelabstreifer ausgebildet ist und eine Dichtlippe aufweist, die der Abstreiflippe mit axialem Anschlag benachbart zugeordnet ist und die abzustreifende Oberfläche des ersten Maschinenelements unter elastischer radialer Vorspannung anliegend berührt.

Der Abstreifer mit der Abstreiflippe, der Dichtlippe und den beiden weiteren Dichtlippen ist dann im Wesentlichen X-förmig ausgebildet.

Der Abstreifer weist für die Abstreiflippe und die Dichtlippe besonders gute Gebrauchseigenschaften auf, wenn axial zwischen der Abstreiflippe und der Dichtlippe ein Gleitwulst angeordnet ist, der die abzustreifende Oberfläche in Umfangsrichtung unter elastischer radialer Vorspannung teilweise anliegend berührt. Der Gleit-/Stützwulst ist so auszubilden, dass er den auf der Welle verbleibenden Restölfilm im Idealfall nicht beeinflusst bzw. eine Gesamtförderwirkung in Richtung der Medienseite begünstigt.

Zur medienseitigen Druckbegrenzung kann eine bekannte Entlastung (Druckbegrenzungsfunktion) über Druckentlastungsnuten in den Abstreiferfunktionsteilen bzw. Bohrungen integriert werden.

Zur medienseitigen Druckbegrenzung kann eine Druckentlastungseinrichtung, beispielsweise eine Druckentlastungsbohrung oder eine Druckentlastungsnut im Abstreifer vorgesehen sein, beispielsweise in der Dichtlippe, in den weiteren Dichtlippen, der Führungsnase oder dem Gleitwulst.

Der Gleitwulst kann einstückig und materialeinheitlich mit der Abstreif- und der Dichtlippe ausgebildet sein. Dadurch handelt es sich bei dem Abstreifer um ein Bauteil, das insgesamt materialeinheitlich hergestellt ist. Der Herstellungsaufwand und die Herstellungskosten sind dadurch auf ein Minimum reduziert.

Das erste Maschinenelement kann als translatorisch hin- und herbewegbare Stange ausgebildet, das zweite Maschinenelement als ein das erste Maschinenelement umschließendes Gehäuse ausgebildet sein.

Weiter verbesserte Gebrauchseigenschaften der Abstreiferanordnung, insbesondere der Abstreiflippe, stellen sich ein, wenn die Abstreiflippe eine Lippenkontur aufweist, die, im Längsschnitt betrachtet, von der Umgebungsseite des Abstreifers axial in Richtung der Seite des abzudichtenden Raums bogenförmig gestaltet ist und eine Tangentensteigung aufweist, die stetig ansteigt. Dadurch ist von Vorteil, dass durch die bogenförmig gestaltete Lippenkontur unerwünschte Veränderungen in der Zuordnung von Abstreiflippe zu abzustreifender Oberfläche kompensiert werden können.

Wenn sich beispielsweise der Abstand und der Winkel der abzustreifenden Oberfläche des relativ zur Abstreiflippe beweglichen ersten Maschinenelements relativ zum Drehpunkt der Dichtlippe verändert, kommt, im Längsschnitt betrachtet, ein anderer Punkt der Lippenkontur zum Eingriff und kompensiert die Veränderung.

Die Lippenkontur kann bevorzugt die Geometrie einer Viertel Ellipse aufweisen. In einem solchen Fall ist von Vorteil, wenn die Hauptachse der elliptischen Lippenkontur und die abzustreifende Oberfläche eines relativ zum Abstreifer axial hin- und her beweglichen Maschinenelements einen Winkel zwischen -45° und +45°, weiter bevorzugt zwischen 0° und +15° einschließen. Die Kompensation von Winkel- und/oder Radialversatz und/oder betriebsbedingten und/oder herstellungsbedingten Toleranzen ist dadurch besonders gut. Daraus resultieren gleichbleibend gute Gebrauchseigenschaften während einer langen Gebrauchsdauer.

Die bogenförmige Lippenkontur kann umgebungsseitig axial in einen ebenen, sich parallel zur abzustreifenden Oberfläche erstreckenden Abstreifbereich auslaufen, wobei das Verhältnis aus axialer Länge des Abstreifers zu axialer Länge des Abstreifbereichs bevorzugt < 0,2 ist. Durch die zuvor beschriebene Geometrie wird einerseits eine gute Abstreifwirkung von Verunreinigungen von der abzustreifenden Oberfläche und andererseits eine gute Rückförderwirkung des abzudichtenden Mediums an der Abstreiflippe vorbei in Richtung des abzudichtenden Raums gewährleistet. Dieser gute Kompromiss trägt maßgeblich zu den gleich bleibend guten Gebrauchseigenschaften während einer langen Gebrauchsdauer bei und zwar auch unter Winkel- und/oder Radialversatz und/oder Toleranzeinflüssen.

Durch die erfindungsgemäße Ausgestaltung der Abstreiferanordnung werden gute Gebrauchseigenschaften hinsichtlich des Pressungsverlaufs des Abstreifers auch unter Winkel- und/oder Radialversatz und/oder unerwünschten Toleranzeinflüssen erreicht.

### Kurzbeschreibung der Zeichnung

Die erfindungsgemäße Abstreiferanordnung wird nachfolgend anhand der Figuren 1 bis 3 näher beschrieben.

Die Figuren 1 bis 3 zeigen jeweils in schematischer Darstellung:
- Fig. 1: eine Abstreiflippe eines Abstreifers als vergrößerter Ausschnitt,
- Fig. 2: ein erstes Ausführungsbeispiel einer Abstreiferanordnung mit einer Abstreiflippe gemäß Fig. 1,
- Fig. 3: ein anderes Ausführungsbeispiel einer Abstreiferanordnung mit einer Abstreiflippe gemäß Fig. 1.

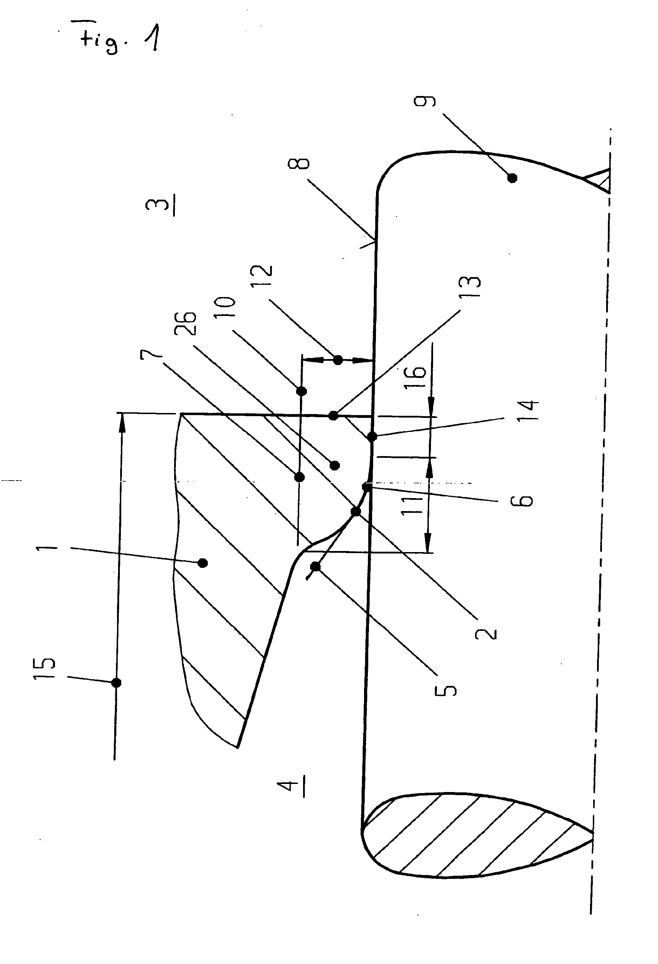

In den Figuren 1 bis 3 ist jeweils ein ringförmiger Abstreifer gezeigt, der eine Abstreiflippe 1 umfasst, die eine radial innere Lippenkontur 2 aufweist, wobei die Lippenkontur 2, im hier gezeigten Schnitt, von der Umgebungsseite 3 des Abstreifers axial in Richtung der Seite des abzudichtenden Raums 4 bogenförmig gestaltet ist. Die Lippenkontur 2 weist eine Tangentensteigung 5 auf, die axial von der Umgebungsseite 3 zum abzudichtenden Raum 4 stetig ansteigt.

In Fig. 1 ist ein Ausschnitt aus einer erfindungsgemäßen Abstreiflippe 1 in vergrößerter Darstellung gezeigt.

Der Abstreifer und die Abstreiflippe 1 bestehen aus einem für Abstreifer an sich bekannten, geeigneten Werkstoff, der nicht Gegenstand der vorliegenden Erfindung ist. Die Abstreiflippe 1 kann beispielsweise aus einem geeigneten elastomeren Werkstoff bestehen.

Im hier dargestellten Ausführungsbeispiel ist der Abstreifer kreisringförmig ausgebildet, mit einer inneren Lippenkontur 2, die die Geometrie einer Viertel Ellipse 6 aufweist. Die Hauptachse 7 der elliptischen Lippenkontur 2, die sich parallel zur abzustreifenden Oberfläche 8 eines relativ zum Abstreifer axial hin-und her beweglichen ersten Maschinenelements 9 erstreckt, schließt mit der Symmetrieachse des kreisringförmigen Abstreifers, einen Winkel 10 ein, der 0° beträgt.

Im hier dargestellten Ausführungsbeispiel ist der Verhältnis aus der Länge 11 der Hauptachse 7 zur Länge 12 der Nebenachse 13 0,75. Der Abstreifbereich 14 der Lippenkontur 2 erstreckt sich eben und parallel zur abzustreifenden Oberfläche 8, wobei das Verhältnis aus der axialen Länge 15 des Abstreifers zur axialen Länge 16 des Abstreifbereichs 15 ≤ 0,2 ist.

Die innere Lippenkontur 2 der Abstreiflippe 1 bedingt, besonders dann, wenn der Abstreifer in seinem Einbauraum schwimmend angeordnet ist, gleichbleibend gute Gebrauchseigenschaften während einer langen Gebrauchsdauer und zwar auch dann, wenn die abzustreifende Oberfläche 8 exzentrisch und/oder unter einem Winkel 10 zum Abstreifer angeordnet ist. Auch herstellungsbedingte und/oder montagebedingte Toleranzen können durch die vorteilhafte Geometrie der Lippenkontur und die schwimmende Anordnung ausgeglichen werden, und der Pressungsverlauf zwischen der Abstreiflippe 1 und der abzustreifenden Oberfläche 8 ist auch unter diesen genannten ungünstigen Bedingungen umfangsseitig weitgehend gleich und sehr genau. Durch diese vorteilhafte Geometrie und die schwimmende Anordnung wird das Eindringen von Fremdkörpern in die Dichtungsordnung bei einfahrendem ersten Maschinenelement 9 verhindert, wobei gleichzeitig abzudichtendes Medium, das zuvor am Abstreifer vorbei in Richtung Umgebung 3 gelangt ist, wieder mit eingeschleppt wird. Das Ausschleppen von abzudichtendem Medium, das an der Abstreiflippe 1 vorbei in Richtung Umgebung 3 gelangt und das anschließende Einschleppen des abzudichtenden Mediums ist vorteilhaft, um die Abstreiflippe 1 ausreichend zu schmieren.

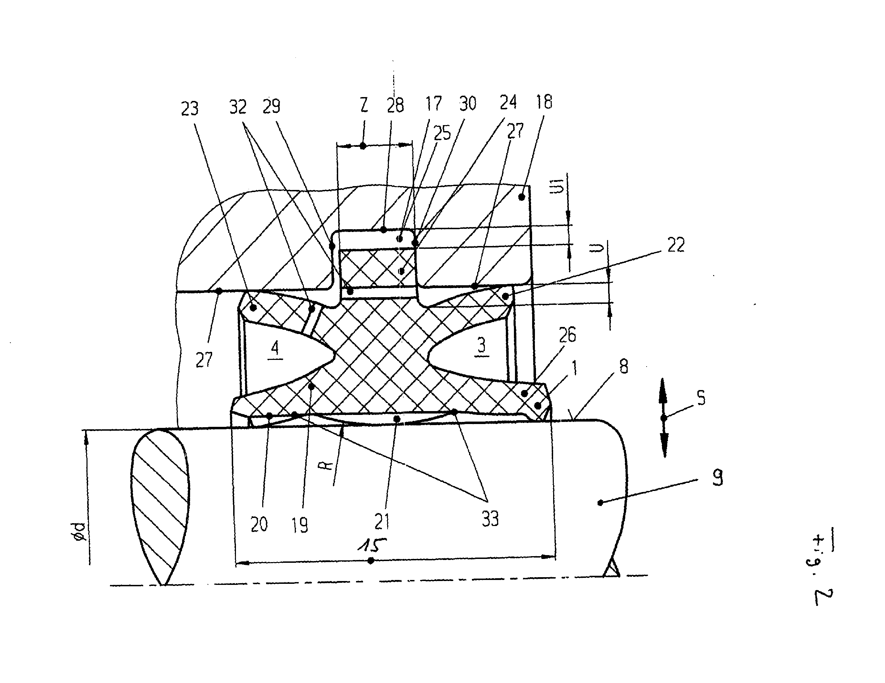

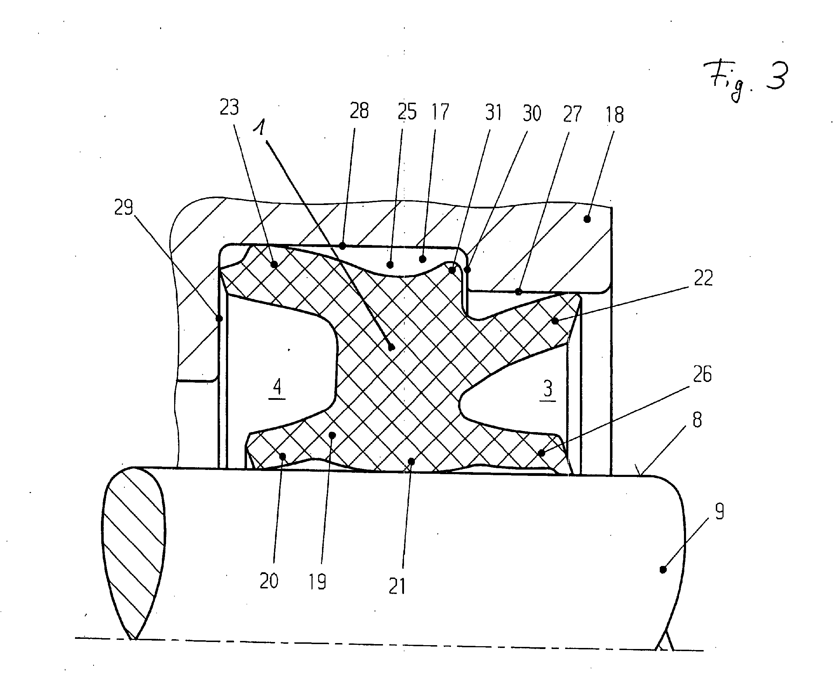

In den Figuren 2 und 3 ist jeweils ein Ausführungsbeispiel einer Abstreiferanordnung gezeigt, die einen Abstreifer mit Abstreiflippe umfasst, wie zuvor beschrieben.

Um die Gebrauchseigenschaften weiter zu verbessern, ist der Abstreifer in einem radial in Richtung des ersten Maschinenelements 9 offen Einbauraum 17 eines zweiten Maschinenelements 18 schwimmend angeordnet. Der Abstreifer ist im Einbauraum in axialer und radialer Richtung schwimmend angeordnet. Das erste Maschinenelement 9 ist in diesem Ausführungsbeispiel als Stange, das zweite Maschinenelement 18 als Gehäuse ausgebildet, wobei generell auch die Möglichkeit besteht, dass das erste Maschinenelement 9 als Gehäuse und das zweite Maschinenelement als Stange ausgebildet ist. Im ersten Fall ist die Dichtung als Stangendichtung ausgebildet, im zweiten Fall als Kolbendichtung.

In den Figuren 2 und 3 ist der Abstreifer einstückig und materialeinheitlich mit einem Dichtring 19 ausgebildet, wobei der Dichtring 19 und der Abstreifer in einer funktionstechnischen Reihenschaltung angeordnet sind. Der Dichtring 19 ist dem Abstreifer axial in Richtung des abzudichtendes Raums 4 mit Abstand benachbart zugeordnet, wobei in den hier gezeigten Ausführungsbeispielen axial zwischen der Dichtlippe 20 des Dichtrings 19 und der Abstreiflippe 1 des Abstreifers ein Gleitwulst 21 angeordnet ist, die die abzustreifende Oberfläche 8 ebenfalls anliegend umschließt. Auch der Gleitwulst 21 ist einstückig und materialeinheitlich mit Abstreifer und Dichtring 19 ausgebildet.

In den Ausführungsbeispielen Figuren 2 und 3 ist der kombinierte Abstreifer /Dichtring im Wesentlichen X-förmig ausgebildet und weist zusätzlich zur Abstreiflippe 1 und der der Abstreiflippe 1 axial benachbart zugeordneten Dichtlippe 20 zwei weitere Dichtlippen 22, 23 auf, die sich radial gegenüber liegend der abzustreifenden Oberfläche 8 am zweiten Maschinenelement 18 abstützen. Die Abstreiflippe 1, die Dichtlippe 20 und die beiden weiteren Dichtlippen 22, 23 befinden sich während ihrer bestimmungsgemäßen Verwendung im eingebauten Zustand im Momentengleichgewicht, das eine stabile Lage auch bei radialen oder kardanischen Bewegungen des beweglichen Maschinenelements 9 gewährleistet. Dieses Momentengleichgewicht ermöglicht bei radialen Verlagerungen des abzustreifenden Maschinenelements 9 eine elastische Nachgiebigkeit, ohne dass sich die vorteilhafte Lage der Abstreiflippe 1 relativ zur abzustreifenden Oberfläche 8 ändert.

In Fig. 2 weist der erfindungsgemäße Abstreifer eine sich radial in Richtung des zweiten Maschinenelements 18 erstreckende Führungsnase 24 auf, die in axialer und radialer Richtung jeweils mit Abstand von einer Führungsnut 25 des zweiten Maschinenelements 18 umschlossen ist, um so eine schwimmende Abstützung zu gewährleisten. Der Abstreifer 1 ist in einem radial in Richtung des ersten Maschinenelements 9 offenen Einbauraum 17 des zweiten Maschinenelements 18 in axialer und radialer Richtung schwimmend angeordnet. Der Abstreifer 1 weist eine sich radial in Richtung des zweiten Maschinenelements 18 erstreckende Führungsnase 24 auf, die in axialer und radialer Richtung jeweils mit Abstand von der Führungsnut 25 des zweiten Maschinenelements 18 umschlossen ist. Während der bestimmungsgemäßen Verwendung ist der Abstreifer 1 deshalb in der Führungsnut 25 in axialer und radialer Richtung schwimmend gelagert.

Axial beiderseits benachbart zur Führungsnase 24 weist der hier gezeigte Abstreifer 1 jeweils eine weitere Dichtlippe 22, 23 auf, wobei die weiteren Dichtlippen 22, 23 die Gehäusewand 27, im Schnitt betrachtet, axial außerhalb der Führungsnut 25 unter elastischer radialer Vorspannung dichtend berühren. Dadurch wird eine Momentengleichgewicht erreicht.

Der Freiraum U bzw. U1 ist größer als die im Betrieb auftretende radiale Beweglichkeit s zwischen den beiden Maschinenelementen 9, 18. Nur so ist die schwimmende Lagerung in radialer Richtung gewährleistet.

Der Gleitwulst 21 hat vorzugsweise einen Radius R, der größer als der axiale Abstand zwischen den weiteren Dichtlippen 22, 23 ist. Der Radius R ist bevorzugt größer als zweimal die Breite Z der Führungsnase 24. Durch einen derart ausgestalteten Gleitwulst wird der auf der abzustreifenden Oberfläche 8 verbleibende Restfilm des abzudichtenden Mediums nicht unerwünscht negativ beeinflusst.

In Fig. 3 ist ein weiteres Ausführungsbeispiel gezeigt, das sich vom Ausführungsbeispiel aus Fig. 2 hauptsächlich dadurch unterscheidet, dass der Abstreifer keine Führungsnase und das zweite Maschinenelement 18 keine Führungsnut aufweist. Dennoch, trotz der vereinfachten Ausgestaltung von Abstreifer und zweitem Maschinenelement 18, ist das vorteilhafte Prinzip der schwimmenden Anordnung verwirklicht.

In diesem Ausführungsbeispiel ist zwischen den weiteren Dichtlippen 22, 23 ein Anschlagnocken 31 vorgesehen, der einstückig ineinander übergehend und materialeinheitlich mit der Abstreiflippe 26, der Dichtlippe 20 und den beiden weiteren Dichtlippen 22, 23 ausgebildet ist. Eine der weiteren Dichtlippen 23 und der Anschlagnocken 31 sind gemeinsam in einer Führungsnut 25 des zweiten Maschinenelements 18 in axialer und radialer Richtung schwimmend angeordnet. Die andere der weiteren Dichtlippen 22 berührt die Gehäusewand 27 axial außerhalb der Führungsnut 25 unter elastischer radialer Vorspannung dichtend anliegend.

Zur medienseitigen Druckbegrenzung kann eine Druckentlastungseinrichtung, beispielsweise eine Druckentlastungsbohrung 32 oder eine Druckentlastungsnut 33 im Abstreifer 1 vorgesehen sein, beispielsweise in der Dichtlippe 20, in den weiteren Dichtlippen 22, 23, der Führungsnase 24 oder dem Gleitwulst 21.

## Patentansprüche

1. Abstreiferanordnung, umfassend einen Abstreifer (1) mit einer Abstreiflippe (26) zum Abstreifen von abzustreifendem Medium von der abzustreifenden Oberfläche (8) eines ersten Maschinenelements (9), wobei die Abstreiflippe (26) die abzustreifende Oberfläche (8) unter elastischer radialer Vorspannung anliegend berührt und wobei der Abstreifer (1) in einem radial in Richtung des ersten Maschinenelements (9) offenen Einbauraum (17) des zweiten Maschinenelements (18) schwimmend angeordnet ist, **dadurch gekennzeichnet, dass** der Abstreifer (1) eine sich radial in Richtung des zweiten Maschinenelements (18) erstreckende Führungsnase (24) aufweist, die in axialer und radialer Richtung jeweils mit Abstand von einer Führungsnut (25) des zweiten Maschinenelements (18) umschlossen und **dadurch** während der bestimmungsgemäßen Verwendung der Abstreiferanordnung in der Führungsnut (25) in axialer und radialer Richtung schwimmend gelagert ist.

2. Abstreiferanordnung nach Anspruch 1, **dadurch gekennzeichnet, dass** axial beiderseits benachbart zur Führungsnase (24) jeweils eine weitere Dichtlippe (22, 23) angeordnet ist und dass die weiteren Dichtlippen (22, 23) die Gehäusewand (27) axial außerhalb der Führungsnut (25) unter elastischer radialer Vorspannung dichtend berühren.

3. Abstreiferanordnung nach Anspruch 1, **dadurch gekennzeichnet, dass** der Abstreiflippe (26) radial gegenüberliegend zumindest eine weitere erste Dichtlippe (23) in einer Führungsnut (25) des zweiten Maschinenelements (18) angeordnet ist und den Nutgrund (28) der Führungsnut (25) dichtend anliegend berührt, wobei die weitere erste Dichtlippe (23) der axial angrenzenden Begrenzungswand (29) der Führungsnut (25) mit axialem Abstand benachbart zugeordnet ist.

4. Abstreiferanordnung nach einem der Ansprüche 1 bis 3, **dadurch gekennzeichnet, dass** die Führungsnase (24) als Anschlagnocken (31) ausgebildet ist.

5. Abstreiferanordnung nach einem der Ansprüche 1 bis 4, **dadurch gekennzeichnet, dass** axial zwischen den weiteren Dichtlippen (22, 23) der Anschlagnocken (31) angeordnet ist.

6. Abstreiferanordnung nach einem der Ansprüche 4 oder 5, **dadurch gekennzeichnet, dass** der Anschlagnocken (31) einstückig ineinander übergehend und materialeinheitlich mit zumindest einer der weiteren Dichtlippen (22, 23) ausgebildet ist.

7. Abstreiferanordnung nach einem der Ansprüche 5 oder 6, **dadurch gekennzeichnet, dass** eine der weiteren Dichtlippen (23) und der Anschlagnocken (31) gemeinsam in einer Führungsnut (25) des zweiten Maschinenelements (18) angeordnet und den jeweils axial benachbart angrenzenden Begrenzungswandungen (29, 30) der Führungsnut (25) jeweils axial beweglich zugeordnet sind.

8. Abstreiferanordnung nach einem der Ansprüche 5 bis 7, **dadurch gekennzeichnet, dass** die andere weitere Dichtlippe (22) die Gehäusewand (27) axial außerhalb der Führungsnut (25) unter elastischer radialer Vorspannung dichtend berührt.

9. Abstreiferanordnung nach einem der Ansprüche 1 bis 8, **dadurch gekennzeichnet, dass** der Abstreifer (1) als Doppelabstreifer ausgebildet ist und eine Dichtlippe (20) aufweist, die der Abstreiflippe (26) mit axialem Abstand benachbart zugeordnet ist und die abzustreifende Oberfläche (8) des ersten Maschinenelements (9) unter elastischer radialer Vorspannung dichtend anliegend berührt.

10. Abstreiferanordnung nach einem der Ansprüche 1 bis 9, **dadurch gekennzeichnet, dass** der Abstreifer (1) mit der Abstreiflippe (26), der Dichtlippe (20) und den weiteren Dichtlippen (22, 23), im Schnitt betrachtet, im Wesentlichen X-förmig ausgebildet ist.

11. Abstreiferanordnung nach einem der Ansprüche 1 bis 10, **dadurch gekennzeichnet, dass** axial zwischen der Abstreiflippe (26) und der Dichtlippe (20) ein Gleitwulst (21) angeordnet ist, der die abzustreifende Oberfläche (8) in Umfangsrichtung unter elastischer radialer Vorspannung teilweise anliegend berührt.

12. Abstreiferanordnung nach Anspruch 11, **dadurch gekennzeichnet, dass** der Gleitwulst (21) einstückig und materialeinheitlich mit der Abstreif-(26) und der Dichtlippe (20) ausgebildet ist.

13. Abstreiferanordnung nach einem der Ansprüche 1 bis 12, **dadurch gekennzeichnet, dass** das erste Maschinenelement (9) als translatorisch hin- und herbewegbare Stange ausgebildet ist.

14. Abstreiferanordnung nach einem der Ansprüche 1 bis 12, **dadurch gekennzeichnet, dass** das zweite Maschinenelement (18) als ein das erste Maschinenelement (9) umschließendes Gehäuse ausgebildet ist.

## Claims

1. Scraper arrangement, comprising a scraper (1) with a scraping lip (26) for scraping a medium to be scraped from the surface (8) to be scraped of a first machine element (9), the scraping lip (26) making contact with the surface (8) to be scraped by lying against it under elastic radial pretensioning, and the scraper (1) being arranged in a floating manner in an installation space (17) of the second machine element (18) that is open radially in the direction of the first machine element (9), **characterized in that** the scraper (1) has a guiding lug (24), which extends radially in the direction of the second machine element (18), is enclosed in the axial and radial directions respectively at a distance from a guiding lug (25) of the second machine element (18) and is thereby mounted in the guiding groove (25) in a floating manner in the axial and radial directions during the use as intended of the scraper arrangement.

2. Scraper arrangement according to Claim 1, **characterized in that** a further sealing lip (22, 23) is respectively arranged on both sides axially adjacent to the guiding lug (24) and **in that** the further sealing lips (22, 23) make contact with the housing wall (27) axially outside the guiding groove (25) in a sealing manner under elastic radial pretensioning.

3. Scraper arrangement according to Claim 1, **characterized in that**, radially opposite the scraping lip (26), at least one further first sealing lip (23) is arranged in a guiding groove (25) of the second machine element (18) and makes contact with the groove base (28) of the guiding groove (25) by lying against it in a sealing manner, the further first sealing lip (23) of the axially adjoining delimiting wall (29) being assigned to the guiding groove (25) adjacently at an axial distance.

4. Scraper arrangement according to one of Claims 1 to 3, **characterized in that** the guiding lug (24) is formed as a stop cam (31).

5. Scraper arrangement according to one of Claims 1 to 4, **characterized in that** the stop cam (31) is arranged axially between the further sealing lips (22, 23).

6. Scraper arrangement according to either of Claims 4 and 5, **characterized in that** the stop cam (31) is formed in one piece with at least one of the further sealing lips (22, 23), merging with it and made of one and the same material.

7. Scraper arrangement according to either of Claims 5 and 6, **characterized in that** one of the further sealing lips (23) and the stop lug (31) are arranged together in a guiding groove (25) of the second machine element (18) and are respectively assigned in an axially movable manner to the respectively axially adjacently adjoining delimiting walls (29, 30) of the guiding groove (25).

8. Scraper arrangement according to one of Claims 5 to 7, **characterized in that** the other further sealing lip (22) makes contact with the housing wall (27) axially outside the guiding groove (25) in a sealing manner under elastic radial pretensioning.

9. Scraper arrangement according to one of Claims 1 to 8, **characterized in that** the scraper (1) is formed as a double scraper and has a sealing lip (20), which is assigned to the scraping lip (26) adjacently at an axial distance and makes contact with the surface (8) to be scraped of the first machine element (9) by lying against it in a sealing manner under elastic radial pretensioning.

10. Scraper arrangement according to one of Claims 1 to 9, **characterized in that**, viewed in section, the scraper (1) with the scraping lip (26), the sealing lip (20) and the further sealing lips (22, 23) is formed in a substantially X-shaped manner.

11. Scraper arrangement according to one of Claims 1 to 10, **characterized in that** arranged axially between the scraping lip (26) and the sealing lip (20) is a sliding bead (21), which makes contact with the surface (8) to be scraped by partially lying against it in the circumferential direction under elastic radial pretensioning.

12. Scraper arrangement according to Claim 11, **characterized in that** the sliding bead (21) is formed in one piece with the scraping lip (26) and the sealing lip (20), and is made of one and the same material.

13. Scraper arrangement according to one of Claims 1 to 12, **characterized in that** the first machine element (9) is formed as a rod which can move back and forth in a translatory manner.

14. Scraper arrangement according to one of Claims 1 to 12, **characterized in that** the second machine element (18) is formed as a housing enclosing the first machine element (9).

## Revendications

1. Dispositif racleur, comprenant un racleur (1) avec une lèvre de raclage (26) pour racler un fluide à racler sur la surface à racler (8) d'un premier élément de machine (9), dans lequel la lèvre de raclage (26) est appliquée en contact sur la surface à racler (8) sous une précontrainte radiale élastique et dans lequel le racleur (1) est disposé de façon flottante dans un espace de montage (17) du deuxième élément de machine (18) ouvert radialement en direction du premier élément de machine (9), **caractérisé en ce que** le racleur (1) présente un ergot de guidage (24) s'étendant radialement en direction du deuxième élément de machine (18), qui est entouré en direction axiale et radiale chaque fois à distance par une rainure de guidage (25) du deuxième élément de machine (18) et est ainsi monté de façon flottante en direction axiale et radiale dans la rainure de guidage (25) pendant l'utilisation prévue du dispositif racleur.

2. Dispositif racleur selon la revendication 1, **caractérisé en ce qu'**une autre lèvre d'étanchéité respective (22, 23) est disposée axialement de part et d'autre à proximité de l'ergot de guidage (24) et **en ce que** les autres lèvres d'étanchéité (22, 23) sont en contact étanche avec la paroi de boîtier (27) axialement à l'extérieur de la rainure de guidage (25) sous une précontrainte radiale élastique.

3. Dispositif racleur selon la revendication 1, **caractérisé en ce qu'**au moins une autre première lèvre d'étanchéité (23) est disposée dans une rainure de guidage (25) du deuxième élément de machine (18) radialement en face de la lèvre de raclage (26) et est appliquée en contact étanche sur le fond de rainure (28) de la rainure de guidage (25), dans lequel l'autre première lèvre d'étanchéité (23) est associée à distance axiale à proximité de la paroi de limitation adjacente (29) de la rainure de guidage (25).

4. Dispositif racleur selon l'une quelconque des revendications 1 à 3, **caractérisé en ce que** l'ergot de guidage (24) se présente sous la forme d'un taquet de butée (31).

5. Dispositif racleur selon l'une quelconque des revendications 1 à 4, **caractérisé en ce que** le taquet de butée (31) est disposé axialement entre les autres lèvres d'étanchéité (22, 23).

6. Dispositif racleur selon l'une quelconque des revendications 4 ou 5, **caractérisé en ce que** le taquet de butée (31) est réalisé en prolongement d'une seule pièce et en un seul matériau, avec au moins une des autres lèvres d'étanchéité (22, 23).

7. Dispositif racleur selon l'une quelconque des revendications 5 ou 6, **caractérisé en ce qu'**une des autres lèvres d'étanchéité (23) et le taquet de butée (31) sont disposés ensemble dans une rainure de guidage (25) du deuxième élément de machine (18) et sont chaque fois associés de façon axialement mobile aux parois de limitation respectives adjacentes axialement proches (29, 30) de la rainure de guidage (25).

8. Dispositif racleur selon l'une quelconque des revendications 5 à 7, **caractérisé en ce que** l'autre lèvre d'étanchéité supplémentaire (22) est appliquée en contact étanche sur la paroi de boîtier (27) axialement à l'extérieur de la rainure de guidage (25) sous une précontrainte radiale élastique.

9. Dispositif racleur selon l'une quelconque des revendications 1 à 8, **caractérisé en ce que** le racleur (1) se présente sous la forme d'un racleur double et présente une lèvre d'étanchéité (20), qui est associée à proximité à distance axiale à la lèvre de raclage (26) et est appliquée en contact étanche sur la surface à racler (8) du premier élément de machine (9) sous une précontrainte radiale élastique.

10. Dispositif racleur selon l'une quelconque des revendications 1 à 9, **caractérisé en ce que** le racleur (1) avec la lèvre de raclage (26), la lèvre d'étanchéité (20) et les autres lèvres d'étanchéité (22, 23), vu en coupe, présente essentiellement une forme en X.

11. Dispositif racleur selon l'une quelconque des revendications 1 à 10, **caractérisé en ce qu'**un bourrelet de glissement (21) est disposé axialement entre la lèvre de raclage (26) et la lèvre d'étanchéité (20), et est appliqué en contact partiel sur la surface à racler (8) en direction périphérique, sous une précontrainte radiale élastique.

12. Dispositif racleur selon la revendication 11, **caractérisé en ce que** le bourrelet de glissement (21) est réalisé d'une seule pièce et en un seul matériau avec la lèvre de raclage (26) et la lèvre d'étanchéité (20).

13. Dispositif racleur selon l'une quelconque des revendications 1 à 12, **caractérisé en ce que** le premier élément de machine (9) se présente sous la forme d'une tige déplaçable en mouvement de translation alternatif.

14. Dispositif racleur selon l'une quelconque des revendications 1 à 12, **caractérisé en ce que** le deuxième élément de machine (18) se présente sous la forme d'un boîtier entourant le premier élément de machine (9).
